(19)

Europäisches
Patentamt
European
Patent Office
Office européen
des brevets

(11) **EP 4 322 059 A1**

(12) **EUROPEAN PATENT APPLICATION**

(43) Date of publication:
**14.02.2024   Bulletin 2024/07**

(21) Application number: **22192594.4**

(22) Date of filing: **29.08.2022**

(51) International Patent Classification (IPC):
**G06N 3/045** *(2023.01)*    **G06N 3/0464** *(2023.01)*
**G06N 3/08** *(2023.01)*

(52) Cooperative Patent Classification (CPC):
**G06N 3/045; G06N 3/0464; G06N 3/08**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority:   **10.08.2022   NL 2032720**

(71) Applicant: **NavInfo Europe B.V.**
**5657 DB Eindhoven (NL)**

(72) Inventors:
• **AKKAYA, Ibrahim Batuhan**
  **5657 DB Eindhoven (NL)**
• **ARANI, Elahe**
  **5657 DB Eindhoven (NL)**
• **ZONOOZ, Bahram**
  **5657 DB Eindhoven (NL)**

(74) Representative: **van Breda, Jacobus**
**Octrooibureau Los & Stigter B.V.**
**P.O. Box 20052**
**1000 HB Amsterdam (NL)**

(54) **METHOD AND SYSTEM FOR MIMICKING SACCADIC HUMAN EYE MOVEMENTS IN AN ARTIFICIAL NEURAL NETWORK**

(57)    A computer-implemented method for mimicking saccadic eye movements in artificial neural networks, wherein said method proposes a bioinspired transformer architecture called Foveated Dynamic Transformers that dynamically selects multiscale tokens with respect to the input image. The foveation and the fixation modules are introduced to the vision transformer block to exploit human visual system inspired mechanisms. To mimic foveation in human visual system, the input token is processed to generate multiscale queries, keys, and values using the foveation module. Next, the foveation module transforms the token in several scales with increasing windows size. To simulate eye movements, the method of the invention comprises the step of using dynamic networks. The dynamic fixation module generates a fixation map corresponding to each token in each transformer block. Tokens that are not at the fixation point are not processed. The processed tokens that are located at the fixation points are merged with the non-fixated tokens and are sent to the next block. Multiple blocks in the transformer process information from multiple fixation points by combining the information transferred from the previous blocks, which enables to implement foveation and fixation mechanisms in a single pass.

Fig. 1

EP 4 322 059 A1

**Description**

The invention relates to a computer-implemented method and a system for mimicking saccadic human eye movements in an artificial neural network.

**General description**

An autonomous driving system is composed of perception and decision-making components. Perception components process the sensory input to gather information from the surrounding of the autonomous vehicle, which decision-making components will use. One of the commonly used sensory devices in the perception component is visual cameras. Modern deep neural network-based computer vision algorithms significantly improve performance compared to traditional methods, making them the preferred solutions in visual perception components. On the other hand, as the input to the decision-making components, wrong information produced by the deep neural networks may lead to an erroneous decision and possibly fatal consequences. Therefore, it is crucial to design robust models for such sensitive applications.

Recent studies reveal a significant disparity between the way deep neural networks and our brains interpret the environment. The small changes, such as adverse weather conditions or sensory noise, can mislead deep neural networks do not fool humans, and our visual systems appear to be significantly more robust, while still being accurate.

In the human visual system (HVS), approximately $10^7$ to $10^8$ bits of information reach the visual nerve every second [1]. Because biological hardware has finite computational capacity, it would be impossible for it to fully process the enormous sensory input.

Instead, the HVS has developed a series of eye movements, called saccadic eye movements, that guide the gaze to specific points in an image. The eye is drawn to salient areas in a scene as possible points of attention and for additional processing, allowing it to create a detailed map of the scene from a series of images of varying resolution [1]; [2]. These points are called fixation points. The resolution, or sampling density, is highest at the fixation points and rapidly decreases away from that point. As a result, when a human observer looks at a location in a real-world image, the front visual channel transmits a variable resolution image to the high-level processing units in the human brain. Foveation is the term for the Human Visual System's (HVS) intrinsic multi-resolution perception. The foveated visual systems with eye movements preserve perceptual performance while resulting in computational and metabolic savings to the brain.

Motivated by biological intuition, several works focused on utilizing foveation and fixation mechanisms in neural network architectures. Recent studies show that a transformer architecture, which was the dominant self-attention-based neural network architecture in natural language processing [3]; [4], applied to image patches can achieve state-of-the-art results [5]; [6]. The success of the vision transformers inspired scholars to investigate the transformer architecture for human vision system inspired mechanisms [7].

Several approaches, inspired by the human visual system, have been proposed to mimic foveation and eye movement before. RAM [8] proposed a model performing a series of moves over an image in order to integrate data prior to categorization. Fixation locations were predicted using the hard-attention mechanism, which was implemented using reinforcement learning. Akbas et al. [9] proposed a foveated object detector that uses variable resolution to analyze the entire picture and aligns its fovea with regions of interest in the input data. The approach incorporates data from several fixations and uses peripheral information to direct eye movements. Similarly, FOVEA [10] proposed a foveated object detector. They offer an image-magnification approach that keeps high resolution for points of interest while keeping the canvas size small. Foveater [7] proposes a foveated transformer model for object classification. It mimics eye movement and uses pooling regions for foveated sampling. The model constructs a confidence map using the self-attention weights corresponding to the class token of the last transformer block to decide the following fixation points. The model iteratively explores the scene and uses the confidence threshold to stop exploration, allocating dynamic computation. However, their model still needs to make multiple iterations to mimic eye movements. The aforementioned approaches are not optimal for two reasons. First, these methods require multiple inferences for each fixation point. Second, they need a fusion mechanism to utilize collective information extracted from multiple fixation points.

It is an object of the invention to correct the shortcomings of the prior art and to provide a solution for using artificial neural networks to mimic the human eye saccadic movements in an efficient and dynamic way. This and other objects which will become apparent from the following disclosure, are provided with a computer-implemented method for mimicking saccadic human eye movements, a data processing system, and a computer-readable medium, having the features of one or more of the appended claims.

In a first aspect of the invention, the computer-implemented method for mimicking saccadic human eye movements in an artificial neural network comprises the steps of:

- providing said network with a plurality of vision transformer blocks;
- providing each block of said plurality of vision transformer blocks with a multi-head self-attention module;
- feeding an input sample to the plurality vision transformer blocks;

wherein the method comprises the steps of:

- providing each block of said plurality of vision transformer blocks with a foveation module for multi-resolution perception of the input sample;
- providing each block of said plurality of vision transformer blocks with a fixation module for selective processing of the input sample.

Suitably, the step of feeding an input sample to the plurality of vision transformer blocks comprises the steps of:

- breaking the input sample into a plurality of nonoverlapping input patches;
- converting said input patches into a plurality of patch-tokens;
- feeding said patch-tokens with auxiliary tokens to the plurality of vision transformer blocks.

The method preferably comprises the steps of:

- using the foveation module for generating multi-scale foveated tokens comprising foveated-query tokens, foveated-key tokens, and foveated-value tokens;
- feeding the foveated-query tokens to the fixation module for outputting two dimensional logits wherein the first dimension of said logit represents a decision of fixating and wherein the second dimension of said logit represents a decision of not fixating.

These features enable dynamic selection of multiscale tokens with respect to the input image. The foveation and the fixation modules are introduced to the vision transformer block to exploit human visual system inspired mechanisms.

To utilize multiscale information, the method preferably comprises the steps of:

- providing a plurality of depthwise separable convolutional layers in the foveation module; and
- extracting information from a gradually expanding receptive field using each successive convolutional layer for implementing foveation for each patch token.

Due to auxiliary tokens, such as classification tokens, input tokens cannot be processed in the convolutional layers. To process the token in the convolution layer, the method preferably comprises the step of reorganizing the patch tokens and the auxiliary tokens. The reorganization operation splits auxiliary tokens and patch tokens. The patch tokens are reorganized in image form to be processed by convolution operation and auxiliary tokens are passed unchanged, as is, to be processed by pointwise convolution which corresponds to the linear operation.

The foveation module utilizes multi-resolution information by applying successive depthwise separable convolutions to the patch tokens. Since the auxiliary tokens, are two-dimensional tokens, the foveation module sequentially processes them by applying pointwise convolutions. Therefore, the method preferably comprises the steps of:

- processing the patch tokens in the foveation module by applying successive depthwise separable convolutions to said patch tokens; and
- processing the auxiliary tokens in the foveation module by applying successive pointwise convolutions to said auxiliary tokens.

Each layer of the foveation module covers different receptive fields, wherein said receptive fields are growing by each layer. To embed multiscale information to the query tokens, the key tokens, and the value tokens, it is preferred that the method comprises the steps of, in each convolutional layer:

- splitting each auxiliary token into three equally sized splits in the channel dimension;
- splitting each patch token into three equally sized splits in the channel dimension; and
- using the three equally sized splits of the auxiliary token and the three equally sized splits of patch token for generating foveated-query, foveated-key, and foveated-value tokens.

Furthermore, the step of using the three equally sized splits of the auxiliary token and the three equally sized splits of patch token for generating foveated-query, foveated-key, and foveated-value tokens preferably comprises the steps of:

- merging outputs of the successive depthwise separable convolutions and merging outputs of the successive pointwise convolutions by inversing the operation in the initial step of reorganizing the patch tokens and the auxiliary tokens; and

- concatenating the merged outputs in the channel dimension for generating foveated-query tokens, foveated-key tokens, and foveated-value tokens.

To choose a fixation point, the human brain uses multi-resolution information provided by the intrinsic foveated perception of a human eye. Similarly, the method of the current invention proposes a fixation module that uses multi-resolution information to decide whether to process the input token. In fact, the method preferably comprises the step of configuring the fixation module for inputting the foveated query and for outputting two dimensional logits, wherein the first dimension of said logits represents a decision of fixating and wherein the second dimension of said logit represents a decision of not fixating.

Advantageously, the method comprises the step of generating a fixation map based on the logits generated by the fixation module, wherein a position on the map is set to 1 when a value in the first dimension of a logit is higher than a value in the second dimension of said logit.

Additionally it is preferred that the method comprises the step of filtering the foveated tokens to be processed in the multi-head self-attention module by using the fixation map, wherein foveated tokens to be processed are labeled as fixated tokens, and wherein foveated tokens not to be processed are labeled as non-fixated tokens.

In fact, the step of using the fixation map for filtering the foveated tokens to be processed in the multi-head self-attention module preferably comprises the steps of:

- processing a fixated-query token and corresponding fixated-key and fixated-value tokens in the multi-head self-attention module, when a value in the first dimension of a logit is higher than a value in the second dimension of said logit; and
- transferring a non-fixated query token and corresponding non-fixated key and non-fixated value tokens to a following transformer block without processing, when a value in the first dimension of a logit is lower than or equal to a value in the second dimension of said logit.

The multi-head self-attention design enables processing only the fixated tokens since the multi-head self-attention mechanism is independent from the input size. Therefore, it is preferable that the method comprises the steps of:

- using the multi-head self-attention module for establishing a global relation between fixated-tokens and for generating an attention matrix for each fixated-token; and
- using said attention matrix for generating the output by weighing a part of the fixated tokens.

The Foveated Dynamic Transformers (FDT) block accepts the full-size token map to generate foveated tokens. Since only the fixated tokens are processed, the processed output shape does not match the desired input size, which is required in the following block. For that purpose, the method preferably comprises the step of combining processed and non-processed tokens of a current transformer block to form inputs of a following transformer block.

To enable mini batch training, the method of the invention preferably comprises the step of training in batch by feeding all the foveated tokens to the multi-head self-attention module without applying any fixation sampling.

To obtain a differentiable fixation map, which is required to train from end to end, the method preferably comprises the step of applying Gumbel-SoftMax with hard labeling to the output of the foveation module for generating the fixation map during training instead of the logit comparison.

Furthermore, the method preferably comprises the step of using the fixation map for calculating a masked attention, wherein a mask takes negative values where the gate map is zero to discard said values from the SoftMax calculation when training in batch. The desired behavior of the fixation module is to focus on the minimum set of tokens that are required to make a correct prediction. To this end, the method preferably comprises the step of using a fixation budget constraint for forcing the network to allocate a budget of processing power, wherein the method preferably comprises the step of calculating a fixation budget loss by using a blockwise norm between a desired percentile and a mean of the fixation map.

Suitably, the method comprises the step of training the at least one vision transformer block in classification tasks, wherein a cross-entropy loss is employed as a task loss, and wherein a total loss comprises the task loss and the fixation budget loss.

The ultimate goal of the method of the current invention is to provide a solution for using artificial neural networks to mimic the human eye saccadic movements in an efficient and dynamic way without the need to make multiple iterations. Therefore, the method preferably comprises the step of using at least a part of the plurality of vision transformer blocks for processing information from multiple fixation points by combining information transferred from previous blocks for implementing foveation and fixation mechanisms in a single pass.

In a second embodiment of the invention, a computer-readable medium is provided with a computer program, wherein when said computer program is loaded and executed by a computer, said computer program causes the computer to carry out the steps of the computer-implemented method according to any one of aforementioned steps.

In a third embodiment of the invention, the data processing system comprise a computer loaded with a computer program wherein said program is arranged for causing the computer to carry out the steps of the computer-implemented method according to any one of aforementioned steps.

The invention will hereinafter be further elucidated with reference to the drawing of an exemplary embodiment of a computer-implemented method according to the invention that is not limiting as to the appended claims.

In the drawing:

- figure 1 shows a schematic diagram for the computer-implemented method according to the invention;
- figure 2 shows a schematic diagram for the computer-implemented method according to the invention; and
- figure 3 shows a schematic diagram for the computer-implemented method according to the invention.

Whenever in the figures the same reference numerals are applied, these numerals refer to the same parts.

## Detailed description

The vision transformer splits the image into patches and projects each onto a latent vector called "token". The sequence of tokens is fed to the transformer block with a global self-attention mechanism that utilizes long-range relations between all input tokens. The transformer block can process tokens independent of the number of input tokens. Therefore, the subset of tokens that correspond to the fixation points can be processed in the transformer block. In addition, the transformer architecture has multiple blocks that process tokens sequentially, which presents an effective way to process collective information of different fixation points.

Dynamic networks can change their topologies or parameters according to input during inference. Spatial-wise Dynamic Networks are primarily used to solve challenges in computer vision. They take advantage of spatial redundancy at the image or token level [11] which shows similarity with the fixation mechanism. Therefore, exploiting spatially dynamic networks is a good tool for implementing the fixation mechanism in an input-dependent manner. The benefit of dynamic token selection is twofold. First, it improves the memory and computation efficiency of the networks since non-fixated tokens are not processed. Second, the network learns to omit redundant information, which improves the robustness of the model.

The method of the current invention proposes a bioinspired transformer architecture called Foveated Dynamic Transformers (FDT) that dynamically selects multiscale tokens with respect to the input image. The foveation and the fixation modules are introduced to the vision transformer block to exploit human visual system inspired mechanisms. To mimic foveation in HVS, the input token is processed to generate multiscale queries, keys, and values using the foveation module. Next, the foveation module transforms the token in several scales with increasing windows size. To simulate eye movements, the method of the invention comprises the step of using dynamic networks, particularly a dynamic fixation module. The dynamic fixation module generates a fixation map corresponding to each token in each transformer block. Tokens that are not at the fixation point are not processed. The processed tokens that are located at the fixation points are merged with the non-fixated tokens and are sent to the next block. Multiple blocks in the transformer process information from multiple fixation points by combining the information transferred from the previous blocks, which enables to implement foveation and fixation mechanisms in a single pass. The percentage of tokens to be labeled as fixation points is referred to as fixation budget and is regularized by a loss function during training. Experiments on ImageNet100 dataset show that the foveation module bring a significant performance improvement over the baseline. On the other hand, the fixation mechanism plays an important role in robustness. Small-budget values show better robustness than higher budgets. The hypothesis is that, similarly to saccadic eye movements, the small fixation budget value forces the network to focus on more representative regions. The visual results of fixation and attention also support this hypothesis. As the fixation budget decreases, the accuracy value also decreases. This exhibits a trade-off between accuracy and robustness that can be adjusted by the desired budget hyperparameter. On the other hand, the decrease in the budget brings computational efficiency which is desirable for resource-constraint devices.

Furthermore, the computer-implemented method of the current invention aims to integrate the foveation and fixation mechanism inspired by the human visual system. Therefore, the method of the current invention comprises the step of adding two light modules to the vision transformer architecture, namely the foveation and fixation modules.

The foveation module is introduced to provide the transformer block with input tokens with a varied resolution. This module generates query, key, and value tokens required by the multi-head self-attention. The query, key, and value tokens contain multiscale information. Therefore, these tokens are called foveated-query, -key, and -value throughout the rest of this document.

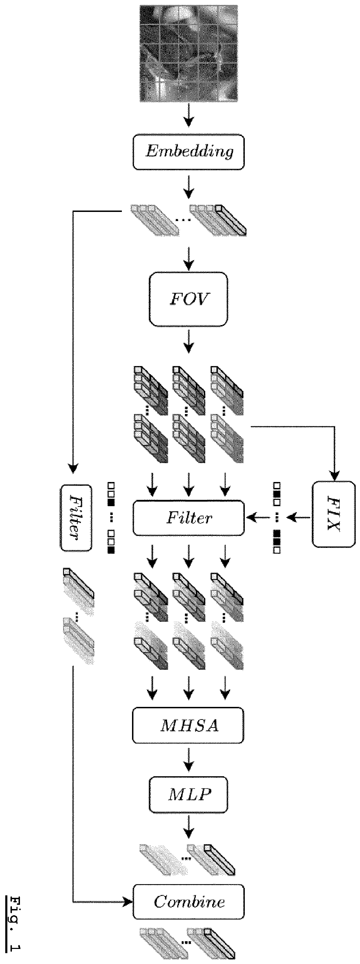

The fixation module integrates the selective token processing capability to the FDT block, which is another HVS-inspired mechanism. This module takes foveated queries as an input and outputs a binary decision for each. Based on the decision generated by the fixation module, the subset of the foveated-query, -key, and -value is processed by the Multi-Head Self Attention module. The rest of the tokens are transferred to the following block without processing. This mechanism is similar to the fixation operation in HVS, which selectively focuses on some part of the input scene based on the scene. The pipeline for the foveated dynamic transformer is shown in Figure 1 where it is shown that the input class and patch tokens are first passed through the foveation module, which samples the input tokens with varied resolution to generate foveated-query, -key and -value. The fixation module uses foveated-queries to find input specific fixation points, which are used to selectively process foveated-tokens.

The foveation module is responsible for generating query, key, and value tokens by embedding multi-resolution information of neighboring features. To utilize multiscale information, the method of the current invention adopts the multiscale module disclosed in the not yet published Dutch patent application 2032161 in the name of the applicant, co-pending as US17/853,739 and EP22182587.0.

The Foveation module is composed of several depthwise separable convolutional layers. Each successive layer extracts the information from the gradually expanding field, which implements the foveation for every token.

Due to auxiliary tokens, such as classification tokens, input tokens cannot be processed in the convolutional layers. To process the token in the convolution layer, the input tokens of block i ($t^i$) are reorganized to obtain patched tokens in image form ($t_p^i$) and auxiliary tokens ($t_a^i$). First, the auxiliary tokens are separated from the input tokens, and then the remaining tokens are reorganized so that they can be processed in the convolutional layers.

$$t_a, t_p = K(t); \qquad K : R^{C \times N} \mapsto R^{C \times A}, R^{C \times H \times W}.$$

where N, A, H and W correspond to the number of tokens, the number of auxiliary tokens, the height of the token, and the width of the token.

A depthwise separable convolution (DSC) divides a kernel into two independent kernels that perform the depthwise and pointwise convolutions, respectively. Depthwise convolution (DC) applies a convolution operation to each input channel with the kernel dimension of $K \times K \times 1$, where K is the kernel size. On the other hand, pointwise convolution (PC) processes the data in the channel dimension. This operation is equivalent to applying convolution with a kernel dimension of $1 \times 1 \times C_{out}$ where $C_{out}$ is the desired channel depth.

The foveation module utilizes multi-resolution information by applying successive depthwise separable convolutions to the patch tokens, $t_p$. Since the auxiliary tokens, $t_a$, are two-dimensional tokens, the foveation module sequentially processes them by applying pointwise convolutions.

$$\mathcal{DSC}(x) = \mathcal{PC}(\mathcal{DC}(x)).$$

$$t_p^l = \mathcal{DSC}^{l-1}(t_p^{l-1}),$$

$$t_a^l = \mathcal{PC}^{l-1}(t_a^{l-1}).$$

Each layer of the foveation module covers different receptive fields, wherein said receptive fields are growing by each layer. To embed multiscale information to the query, key, and value tokens, both auxiliary and patch related tokens of each layer are split into the three equally sized splits in the channel dimension to be used for query, key, and value tokens, respectively.

$$t_{aq}, t_{ak}, t_{av} = S(t_a); \qquad S : R^{C \times A} \mapsto R^{C/3 \times A}, R^{C/3 \times A}, R^{C/3 \times A},$$

$$t_{pq}, t_{pk}, t_{pv} = S(t_p); \qquad S : R^{C \times H \times W} \mapsto R^{C/3 \times H \times W}, R^{C/3 \times H \times W}, R^{C/3 \times H \times W}.$$

Finally, auxiliary and patch splits from each layer are merged by applying the inverse operation that is applied for initial rearrangement and concatenated in the channel dimension to form foveated-query ($q_f$), -key ($k_f$) and -value ($k_f$).

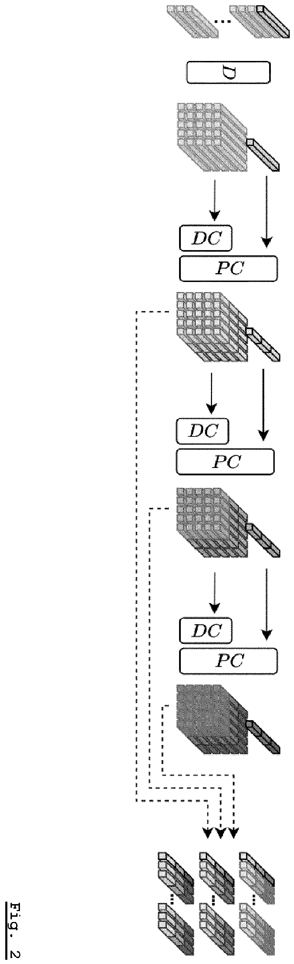

Figure 2 shows the pipeline of the Foveation module wherein it is shown that the input class and patch tokens are first reorganized to be processed by the convolution layers. The patch tokens are processed by depthwise separable convolution while the class token is only processed by pointwise convolution. The tokens processed by multiple convolution layers are reorganized to generate query, key and value tokens.

Fixation Module:

Humans make a sequence of eye movements to generate a detailed map of the scene. To choose the fixation point, the brain uses multi-resolution information provided by the intrinsic foveated perception of a human eye. The method of the current invention proposes a fixation module that uses multi-resolution information to decide whether to process the input token.

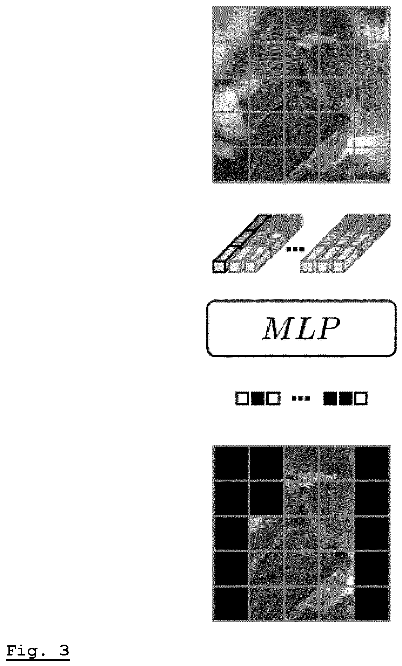

The fixation module, illustrated in figure 3, decides the fixation point using the information in the foveated-query token. The foveated-query token contains multi-resolution information which grants a large receptive field on the input token t. Having a large receptive field enables one to determine the fixation, based only on a single foveated token. Therefore, the method of the invention comprises the step of implementing the fixation module ($M_{fix}$) as a simple neural network comprising a single linear layer, which takes the foveated query as an input and outputs two logits corresponding to fixating or not:

$$\ell_{fix}^{i,j} = \mathcal{M}_{fix}(q_f^{i,j}) \quad \forall i \in \{0, ..., H-1\}, \forall j \in \{0, ..., W-1\}.$$

To generate a fixation map, the method of the invention comprises the step of feeding all the foveated query tokens to the fixation module ($M_{fix}$). The fixation map is generated based on the logit generated by the fixation module. The position on the map where the first logit value is higher than the second logit value is set to 1:

$$g(i,j) = \begin{cases} 1, & \ell_{fix}^{i,j}(0) > \ell_{fix}^{i,j}(1), \\ 0, & otherwise. \end{cases}$$

The fixation map is used to filter foveated tokens to be processed in the multi-head self-attention module.

*Transformer Architecture:*

Human visual systems transmit the required information using the foveation and fixation mechanisms in an efficient way. The information transmitted is processed for visual perception in the brain. Inspired by the mechanism of biological information processing, the method of the invention comprises the step of exclusively processing the fixated tokens selected by the fixation models.

The method of the invention comprises the step of using a vision transformer (ViT) architecture to process tokens. Furthermore, the method of the invention comprises the step of modifying the block of the standard ViT architecture by introducing the foveation and fixation models. The method of the invention comprises the step of using the MSA and MLP modules for processing the tokens. The data flow in FDT is formulated as follows:

$$q_{fov}, k_{fov}, v_{fov} = \text{FOV}(\text{LN}(x)),$$
$$g = \text{FIX}(q_{fov}),$$

$$q_{fix}, k_{fix}, v_{fix}, x_{fix} = \left\{ q_{fov}^{i,j}, k_{fov}^{i,j}, v_{fov}^{i,j}, x^{i,j} \mid g(i,j) = 1 \right\},$$

$$x_{fix} = \text{MSA}(q_{fix}, k_{fix}, v_{fix}) + x_{fix},$$

$$x_{fix} = \text{MLP}(\text{LN}(x_{fix})) + x_{fix}.$$

The LN, FOV, FIX, MSA, and MLP correspond to layer norm, foveation, fixation, multi-head self-attention, and multilayer perceptron modules, respectively.

The MSA design enables processing only the fixated tokens since the multi-head self-attention mechanism is independent from the input size. MSA establishes a global relation between fixated-tokens and generates an attention matrix for each input token. The attention matrix is used for generating the output by weighing a part of the fixated values. The formulation of MSA is as follows:

$$A_{fix} = \text{softmax}\left(q_{fix}k_{fix}^{\top}/\sqrt{D_h}\right),$$

$$\text{MSA}(q_{fix}, k_{fix}, v_{fix}) = A_{fix}v_{fix},$$

where the $D_h$ is the number of heads.

To be noted that the FDT block accepts the full-size token map to generate foveated tokens. Since only the fixated tokens are processed, the processed output ($x_{fix}$) shape does not match the desired input size, which is required in the following block. For that purpose, the processed and non-processed tokens are combined as follows:

$$y^{i,j} = \begin{cases} x_{fix}, & g(i,j) = 1, \\ x, & otherwise. \end{cases}$$

Dynamic network training:

The fixation module in the FDT architecture applies the selection operation over the foveated tokens. In that sense, it behaves like a gating network that dynamically selects the fixation tokens from the foveated tokens. Since the characteristic of each input is different, the number of selected tokens differs for each of them. That prevents a model from being trained in batches. To enable mini batch training, the method of the invention comprises the step of feeding all the foveated tokens to the MSA module without applying any fixation sampling.

To obtain a differentiable fixation map, which is required to train from end to end, the method of the invention comprises the step of applying Gumbel-SoftMax with hard labeling to the output of the foveation module ($\ell_{fix}$) to generate the fixation map during training instead of the logit comparison. The method of the invention comprises the step of using the fixation map for calculating a masked attention. The mask takes very large negative values where the gate map is zero to discard these values from the SoftMax calculation:

$$q_{fov}, k_{fov}, v_{fov} = \text{FOV}(\text{LN}(x)),$$

$$g = \text{FIX}(q_{fov}),$$

$$x_{masked} = \text{MSA}_{masked}(q_{fov}, k_{fov}, v_{fov}, g) + x,$$

$$x_{masked} = \text{MLP}(\text{LN}(x_{masked})) + x_{masked}.$$

$$A_{masked} = \text{softmax}\left(q_{fov}k_{fov}^{\top}/\sqrt{D_h} + \mathbb{M}\right),$$

$$\text{MSA}_{masked}(q_{fix}, k_{fix}, v_{fix}) = A_{masked}v_{fix},$$

$$y^{i,j} = \begin{cases} x_{fix}, & g(i,j) = 1, \\ x, & otherwise. \end{cases}$$

Budget Constraint:

The fixation module prefers to assign all tokens as a fixation point when there is no budget restriction in order to achieve high performance. However, the desired behavior of the fixation module is to focus on the minimum set of tokens that are required to make a correct prediction. To this end, the method of the invention comprises the step of using a fixation budget constraint to force the network to allocate a certain percentage of all tokens. In particular, the method of the invention comprises the step of calculating a fixation budget loss by using the blockwise $\ell2$ norm between the desired percentile and the mean of the fixation map. Fixation budget loss is defined as follows.

$$\mathcal{L}_{budget} = \frac{1}{L} \sum_{\ell=0}^{L-1} \|\mathbb{E}(g) - \beta\|^2,$$

where g is the fixation map, $\beta$ is the desired budget, and L is the number of blocks.
FDT is trained in classification tasks. As a task loss, a cross-entropy loss is employed. Together with the task loss, the total loss is defined as follows:

$$\mathcal{L} = \mathcal{L}_{classification} + \lambda \cdot \mathcal{L}_{budget}.$$

**Analysis**

FDT according to the method of the current invention implements HVS inspired foveation and fixation modules. In order to analyze the contribution of these modules, the robustness of the FDT against adversarial attacks is evaluated.
FDT is evaluated in the image classification task on the ImageNet-100 dataset. The ImageNet-100 dataset is a subset of the ImageNet-1k dataset from the 2012 ImageNet Large-Scale Visual Recognition Challenge. There are 100 classes sampled from ImageNet-1k randomly. Each class has 1300 training images and 50 validation images. Top-1 accuracy with a single 224x224 crop is reported.
The same training settings with DeiT [5] is used to achieve a fair comparison using the same set of augmentations and regularizations. The FDT network is built on the Deit-Small model and, in all analyzes, compared FDT with the DeiT-Small model. During training, the AdamW optimizer is employed for 300 epochs with cosine learning rate decay, including 20 epochs for linear warm-up. The training batch size is set to 128. A single v100 GPU is used both for training and evaluation of all models. The initial learning rate, weight decay, and momentum are set at 0.001, 0.05, and 0.9, respectively.

*Robustness against Adversarial Attacks*

The model's robustness is evaluated using 13 different adversarial attack methods. The Torchattacks library [13] is used to implement adversarial attacks. All methods, except PGD, run with the default values. The epsilon value for PGD is set to 0.1 to weaken the attack strength. The adversarial robustness results are presented for the gating budget $\beta$ of 0.4.

Table 1: Robustness against adversarial attacks.

| Model | VANILLA | GN | FGSM | BIM | CW | RFGSM | PGD | PGDL2 | EOTPGD | TPGD | FFGSM | MIFGSM | APGD | APGDT | Average |
|---|---|---|---|---|---|---|---|---|---|---|---|---|---|---|---|
| DeiT | 58.18 | 50.66 | 19.90 | 1.96 | 52.24 | 5.28 | 0.26 | 26.00 | 7.42 | 21.84 | 7.46 | 0.28 | 16.72 | 17.98 | 17.54 |
| $FDT_{0.4}$ | 63.30 | 56.98 | 46.46 | 29.84 | 62.04 | 21.38 | 12.98 | 49.94 | 26.04 | 44.66 | 25.02 | 12.16 | 37.90 | 44.96 | 36.18 |

The results are presented in Table 1. Each column in the table corresponds to a different adversarial attack method, except for the first row. Vanilla refers to the case in which no adversarial attack is applied to the input image. The rows present the accuracy values. FDT outperforms DeiT in all types of attack. To present the robustness with respect to attack strength, both models are evaluated applying PGD attacks with different strengths by changing the epsilon values. The results are shown in Table 2. The models are evaluated for epsilon values of 0.001, 0.005, and 0.01. The accuracy values are presented for FDT and DeiT. The experiments show that the robustness against adversarial attacks is even better for stronger attacks.

*Table 2: Robustness against PGD attacks with different strengths.*

|  | 0 | 1.00E-03 | 5.00E-03 | 1.00E-02 |
|---|---|---|---|---|
| DeiT | 58.18 | 46.62 | 22.38 | 8.54 |
| $FDT_{0.4}$ | 63.30 | 60.46 | 51.24 | 40.66 |
| Δ | 5.12 | 13.84 | 28.86 | 32.12 |

Embodiments of the present invention can include every combination of features that are disclosed herein independently from each other.

Typical application areas of the invention include, but are not limited to:

- Road condition monitoring
- Road signs detection
- Parking occupancy detection
- Defect inspection in manufacturing
- Insect detection in agriculture
- Aerial survey and imaging

Although the invention has been discussed in the foregoing with reference to an exemplary embodiment of the method of the invention, the invention is not restricted to this particular embodiment which can be varied in many ways without departing from the invention. The discussed exemplary embodiment shall therefore not be used to construe the append-ed claims strictly in accordance therewith. On the contrary the embodiment is merely intended to explain the wording of the appended claims without intent to limit the claims to this exemplary embodiment. The scope of protection of the invention shall therefore be construed in accordance with the appended claims only, wherein a possible ambiguity in the wording of the claims shall be resolved using this exemplary embodiment.

Variations and modifications of the present invention will be obvious to those skilled in the art and it is intended to cover in the appended claims all such modifications and equivalents. The entire disclosures of all references, applications, patents, and publications cited above are hereby incorporated by reference. Unless specifically stated as being "essential" above, none of the various components or the interrelationship thereof are essential to the operation of the invention. Rather, desirable results can be achieved by substituting various components and/or reconfiguration of their relationships with one another.

Optionally, embodiments of the present invention can include a general or specific purpose computer or distributed system programmed with computer software implementing steps described above, which computer software may be in any appropriate computer language, including but not limited to C++, FORTRAN, ALGOL, BASIC, Java, Python, Linux, assembly language, microcode, distributed programming languages, etc. The apparatus may also include a plurality of such computers / distributed systems (e.g., connected over the Internet and/or one or more intranets) in a variety of hardware implementations. For example, data processing can be performed by an appropriately programmed microprocessor, computing cloud, Application Specific Integrated Circuit (ASIC), Field Programmable Gate Array (FPGA), or the like, in conjunction with appropriate memory, network, and bus elements. One or more processors and/or microcontrollers can operate via instructions of the computer code and the software is preferably stored on one or more tangible non-transitive memory-storage devices.

References:

[1] Laurent Itti and Christof Koch. Computational modelling of visual attention. Nature reviews neuroscience, 2(3):194-203, 2001.

[2] Neil DB Bruce and John K Tsotsos. Saliency, attention, and visual search: An information theoretic approach. Journal of vision, 9(3):5-5, 2009.

[3] Jacob Devlin, Ming-Wei Chang, Kenton Lee, and Kristina Toutanova. Bert: Pre-training of deep bidirectional transformers for language understanding. arXiv preprint arXiv:1810.04805, 2018.

[4] Ashish Vaswani, Noam Shazeer, Niki Parmar, Jakob Uszkoreit, Llion Jones, Aidan N Gomez, Lukasz Kaiser, and Illia Polosukhin. Attention is all you need. Advances in neural information processing systems, 30, 2017.

[5] Hugo Touvron, Matthieu Cord, Matthijs Douze, Francisco Massa, Alexandre Sablayrolles, and Hervé Jégou. Training data-efficient image transformers & distillation through attention. In International Conference on Machine Learning, pp. 10347-10357. PMLR, 2021.

[6] Salman Khan, Muzammal Naseer, Munawar Hayat, Syed Waqas Zamir, Fahad Shahbaz Khan, and Mubarak Shah. Transformers in vision: A survey. ACM Computing Surveys (CSUR), 2021.

[7] Aditya Jonnalagadda, William Wang, and Miguel P Eckstein. Foveater: Foveated transformer for image classification. arXiv preprint arXiv:2105.14173, 2021.

[8] Volodymyr Mnih, Nicolas Heess, Alex Graves, et al. Recurrent models of visual attention. Advances in neural information processing systems, 27, 2014.

[9] Emre Akbas and Miguel P Eckstein. Object detection through search with a foveated visual system. PloS computational biology, 13(10):e1005743, 2017.

[10] Chittesh Thavamani, Mengtian Li, Nicolas Cebron, and Deva Ramanan. Fovea: Foveated image magnification for autonomous navigation. In Proceedings of the IEEE/CVF International Conference on Computer Vision, pp. 15539-15548, 2021.

[11] Yizeng Han, Gao Huang, Shiji Song, Le Yang, Honghui Wang, and Yulin Wang. Dynamic neural networks: A survey. IEEE Transactions on Pattern Analysis and Machine Intelligence, 2021.

[12] Jeremy Freeman and Eero P Simoncelli. Metamers of the ventral stream. Nature neuroscience, 14(9): 1195-1201, 2011.

[13] Hoki Kim. Torchattacks: A pytorch repository for adversarial attacks. arXiv preprint arXiv:2010.01950, 2020.

**Claims**

1. A computer-implemented method for mimicking saccadic human eye movements in an artificial neural network wherein the method comprises the steps of:

   - providing said network with a plurality of vision transformer blocks;
   - providing each block of said plurality of vision transformer blocks with a multi-head self-attention module;
   - feeding an input sample to the plurality of vision transformer blocks, preferably by:

      o breaking the input sample into a plurality of nonoverlapping input patches;
      o converting said input patches into a plurality of patch-tokens; and
      o feeding said patch-tokens with auxiliary tokens to the plurality of vision transformer blocks;

   **characterized in that** the method comprises the steps of:

      - providing each block of said plurality of vision transformer blocks with a foveation module for multi-resolution perception of the input sample;
      - providing each block of said plurality of vision transformer blocks with a fixation module for selective processing of the input sample.

2. The computer-implemented method according to any one of the preceding claims, **characterized in that** the method comprises the steps of:

      - using the foveation module for generating multi-scale foveated tokens comprising foveated-query tokens, foveated-key tokens, and foveated-value tokens;
      - feeding the foveated-query tokens to the fixation module for outputting two dimensional logits, wherein the first dimension of said logits represents a decision of fixating and wherein the second dimension of said logits represents a decision of not fixating.

3. The computer-implemented method of any one of the preceding claims, **characterized in that** the method comprises the steps of:

- providing a plurality of depthwise separable convolutional layers in the foveation module; and
- extracting information from a gradually expanding receptive field using each successive convolutional layer for implementing foveation for each patch token.

4. The computer-implemented method of any one of the preceding claims, **characterized in that** the method comprises the step of reorganizing the patch tokens and the auxiliary tokens, wherein patch tokens are provided in image form, and wherein auxiliary tokens are provided unchanged, and wherein preferably the method comprises the steps of:

- processing the patch tokens in the foveation module by applying successive depthwise separable convolutions to said patch tokens; and
- processing the auxiliary tokens in the foveation module by applying successive pointwise convolutions to said auxiliary tokens.

5. The computer-implemented method of any one of the preceding claims, **characterized in that** the method comprises the steps of, in each convolutional layer:

- splitting each auxiliary token into three equally sized splits in the channel dimension;
- splitting each patch token into three equally sized splits in the channel dimension; and
- using the three equally sized splits of the auxiliary tokens and the three equally sized splits of patch tokens for generating foveated-query tokens, foveated-key tokens, and foveated-value tokens, preferably by:

  o merging outputs of the successive depthwise separable convolutions and merging outputs of the successive pointwise convolutions by inversing the operation in the initial step of reorganizing the patch tokens and the auxiliary tokens; and
  o concatenating the merged outputs in the channel dimension for generating foveated-query tokens, foveated-key tokens, and foveated-value tokens.

6. The computer-implemented method of any one of the preceding claims, **characterized in that** the method comprises the step of configuring the fixation module for inputting the foveated-query tokens and for outputting two dimensional logits, wherein the first dimension of said logits represents a decision of fixating and wherein the second dimension of said logits represents a decision of not fixating.

7. The computer-implemented method of any one of the preceding claims, **characterized in that** the method comprises the step of generating a fixation map based on the logits generated by the fixation module, wherein a position on the map is set to 1 when a value in the first dimension of a logit is higher than a value in the second dimension of said logit, wherein, preferably, the method comprises the step of applying Gumbel-SoftMax with hard labeling to the output of the foveation module for generating the fixation map during training instead of the logit comparison.

8. The computer-implemented method of any one of the preceding claims, **characterized in that** the method comprises the step of filtering the foveated tokens to be processed in the multi-head self-attention module by using the fixation map, wherein foveated tokens to be processed are labeled as fixated tokens, and wherein foveated tokens not to be processed are labeled as non-fixated tokens.

9. The computer-implemented method according to any one of the preceding claims, **characterized in that** the method comprises the steps of:

- processing the fixated-query tokens and the corresponding fixated-key tokens and fixated-value tokens in the multi-head self-attention module, when a value in the first dimension of a logit is higher than a value in the second dimension of said logit; and
- transferring the non-fixated query tokens and the corresponding non-fixated key tokens and non-fixated value tokens to a following transformer block without processing, when a value in the first dimension of a logit is lower than or equal to a value in the second dimension of said logit;

wherein preferably the method comprises the step of combining processed and non-processed tokens of a current transformer block to form inputs of a following transformer block.

10. The computer-implemented method of any one of the preceding claims, **characterized in that** the method comprises the steps of:

- using the multi-head self-attention module for establishing a global relation between fixated-tokens and for generating an attention matrix for each fixated-token; and
- using said attention matrix for generating an output by weighing a part of the fixated tokens.

11. The computer-implemented method of any one of the preceding claims, **characterized in that** the method comprises the step of training in batch by feeding all the foveated tokens to the multi-head self-attention module without applying any fixation sampling, preferably, the method comprises the step of using the fixation map for calculating a masked attention, wherein a mask takes large negative values where the gate map is zero to discard said values from the SoftMax calculation when training in batch.

12. The computer-implemented method of any one of the preceding claims, **characterized in that** the method comprises the step of using a fixation budget constraint for forcing the network to allocate a budget of processing power, wherein the method comprises the step of calculating a fixation budget loss by using a blockwise norm between a desired percentile and a mean of the fixation map, wherein preferably the method comprises the step of training the at least one vision transformer block in classification tasks, wherein a cross-entropy loss is employed as a task loss, and wherein a total loss comprises the task loss and the fixation budget loss.

13. The computer-implemented method of any one of the preceding claims, **characterized in that** the method comprises the step of using at least a part of the plurality of vision transformer blocks for processing information from multiple fixation points by combining information transferred from previous blocks for implementing foveation and fixation mechanisms in a single pass.

14. A computer-readable medium provided with a computer program, **characterized in that** when said computer program is loaded and executed by a computer, said computer program causes the computer to carry out the steps of the computer-implemented method according to any one of claims 1-13.

15. A data processing system comprising a computer loaded with a computer program, **characterized in that** said program is arranged for causing the computer to carry out the steps of the computer-implemented method according to any one of claims 1-13.

Fig. 1

Fig. 2

Fig. 3

Europäisches
Patentamt

European
Patent Office

Office européen
des brevets

**EUROPEAN SEARCH REPORT**

Application Number

EP 22 19 2594

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | LEE YOUNGWAN ET AL: "MPViT: Multi-Path Vision Transformer for Dense Prediction", 2022 IEEE/CVF CONFERENCE ON COMPUTER VISION AND PATTERN RECOGNITION (CVPR), IEEE, 18 June 2022 (2022-06-18), pages 7277-7286, XP034192865, DOI: 10.1109/CVPR52688.2022.00714 * Abstract; Sections 1 and 3-5; figures 1,3 * | 1-15 | INV. G06N3/045 G06N3/0464 G06N3/08 |
| A | YONGMING RAO ET AL: "Dynamic Spatial Sparsification for Efficient Vision Transformers and Convolutional Neural Networks", ARXIV.ORG, CORNELL UNIVERSITY LIBRARY, 201 OLIN LIBRARY CORNELL UNIVERSITY ITHACA, NY 14853, 4 July 2022 (2022-07-04), XP091263410, * Abstract; Sections 1 and 3-5; figure 2 * | 1-15 | |
| A | YIN HONGXU ET AL: "A-ViT: Adaptive Tokens for Efficient Vision Transformer", 2022 IEEE/CVF CONFERENCE ON COMPUTER VISION AND PATTERN RECOGNITION (CVPR), IEEE, 18 June 2022 (2022-06-18), pages 10799-10808, XP034194549, DOI: 10.1109/CVPR52688.2022.01054 * Abstract; Sections 1 and 3-4; figures 1,2,3 * | 1-15 | TECHNICAL FIELDS SEARCHED (IPC) G06N |

−/−−

The present search report has been drawn up for all claims

| Place of search | Date of completion of the search | Examiner |
|---|---|---|
| The Hague | 21 April 2023 | Klasen, TJ |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

# EUROPEAN SEARCH REPORT

Application Number

EP 22 19 2594

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | YOUWEI LIANG ET AL: "Not All Patches are What You Need: Expediting Vision Transformers via Token Reorganizations", ARXIV.ORG, CORNELL UNIVERSITY LIBRARY, 201 OLIN LIBRARY CORNELL UNIVERSITY ITHACA, NY 14853, 16 February 2022 (2022-02-16), XP091160460, * Abstract; Sections 1 and 3-4; figure 2 * | 1-15 | |
| A | WU HAIPING ET AL: "CvT: Introducing Convolutions to Vision Transformers", 2021 IEEE/CVF INTERNATIONAL CONFERENCE ON COMPUTER VISION (ICCV), IEEE, 10 October 2021 (2021-10-10), pages 22-31, XP034092703, DOI: 10.1109/ICCV48922.2021.00009 * Abstract; Sections 1 and 3-4; figures 2, 3 * | 1-15 | |
| A | REN SUCHENG ET AL: "Shunted Self-Attention via Multi-Scale Token Aggregation", 2022 IEEE/CVF CONFERENCE ON COMPUTER VISION AND PATTERN RECOGNITION (CVPR), IEEE, 18 June 2022 (2022-06-18), pages 10843-10852, XP034195986, DOI: 10.1109/CVPR52688.2022.01058 * Abstract; Sections 1 and 3-4; figures 2, 4, 5 * | 1-15 | TECHNICAL FIELDS SEARCHED (IPC) |

The present search report has been drawn up for all claims

| Place of search | Date of completion of the search | Examiner |
|---|---|---|
| The Hague | 21 April 2023 | Klasen, TJ |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- NL 2032161
- US 17853739 B
- EP 22182587

### Non-patent literature cited in the description

- **LAURENT ITTI ; CHRISTOF KOCH.** Computational modelling of visual attention. *Nature reviews neuroscience,* 2001, vol. 2 (3), 194-203
- **NEIL DB BRUCE ; JOHN K TSOTSOS.** Saliency, attention, and visual search: An information theoretic approach. *Journal of vision,* 2009, vol. 9 (3), 5-5
- **JACOB DEVLIN ; MING-WEI CHANG ; KENTON LEE ; KRISTINA TOUTANOVA.** Bert: Pre-training of deep bidirectional transformers for language understanding. *arXiv preprint arXiv:1810.04805,* 2018
- **ASHISH VASWANI ; NOAM SHAZEER ; NIKI PARMAR ; JAKOB USZKOREIT ; LLION JONES ; AIDAN N GOMEZ ; LUKASZ KAISER ; ILLIA POLOSUKHIN.** Attention is all you need. *Advances in neural information processing systems,* 2017, vol. 30
- Training data-efficient image transformers & distillation through attention. **HUGO TOUVRON ; MATTHIEU CORD ; MATTHIJS DOUZE ; FRANCISCO MASSA ; ALEXANDRE SABLAYROLLES ; HERVÉ JÉGOU.** International Conference on Machine Learning. PMLR, 2021, 10347-10357
- **SALMAN KHAN ; MUZAMMAL NASEER ; MUNAWAR HAYAT ; SYED WAQAS ZAMIR ; FAHAD SHAHBAZ KHAN ; MUBARAK SHAH.** Transformers in vision: A survey. *ACM Computing Surveys (CSUR),* 2021
- **ADITYA JONNALAGADDA ; WILLIAM WANG ; MIGUEL P ECKSTEIN.** Foveater: Foveated transformer for image classification. *arXiv preprint arXiv:2105.14173,* 2021
- **VOLODYMYR MNIH ; NICOLAS HEESS ; ALEX GRAVES et al.** Recurrent models of visual attention. *Advances in neural information processing systems,* 2014, vol. 27
- **EMRE AKBAS ; MIGUEL P ECKSTEIN.** Object detection through search with a foveated visual system. *PloS computational biology,* 2017, vol. 13 (10), e1005743
- **CHITTESH THAVAMANI ; MENGTIAN LI ; NICOLAS CEBRON ; DEVA RAMANAN.** Fovea: Foveated image magnification for autonomous navigation. *Proceedings of the IEEE/CVF International Conference on Computer Vision,* 2021, 15539-15548
- **YIZENG HAN ; GAO HUANG ; SHIJI SONG ; LE YANG ; HONGHUI WANG ; YULIN WANG.** Dynamic neural networks: A survey. *IEEE Transactions on Pattern Analysis and Machine Intelligence,* 2021
- **JEREMY FREEMAN ; EERO P SIMONCELLI.** Metamers of the ventral stream. *Nature neuroscience,* 2011, vol. 14 (9), 1195-1201
- **HOKI KIM.** Torchattacks: A pytorch repository for adversarial attacks. *arXiv preprint arXiv:2010.01950,* 2020